# EUROPEAN PATENT APPLICATION

(11) **EP 2 053 829 A1**
(43) Date of publication of application: **29.04.2009**
(21) Application number: 08152087.6
(22) Date of filing: 28.02.2008
(51) Int. Cl.: H04L 29/06

(54) **Method and devices for data context sharing**

(30) Priority: 26.10.2007 US 982781 P
(71) Applicant: TELEFONAKTIEBOLAGET LM ERICSSON (publ), 164 83 Stockholm (SE)
(72) Inventor: Anyuru, Andreas, SE-224 74 Lund (SE); Bejram, Christian, SE-240 30 Marieholm (SE)
(74) Representative: Andersson, Björn E.

(57) **Abstract**

A method is disclosed of sharing one or more available data contexts, each providing Internet access, between a plurality of connections associated with applications of a communication device. Each of the plurality of connections is associated with an Internet account defining an Internet account setting. The method comprises determining whether any of the Internet accounts associated with the plurality of connections have the same Internet account setting; organising the plurality of connections into one or more groups based on the determination, wherein each group includes one or more of the plurality of connections as group members; assigning a group priority to each of the one or more groups; and using each of the one or more available data contexts to provide Internet access to the group members of one of the one or more groups based on the group priorities. Corresponding computer program product, arrangement and communication device are also disclosed.

## Description

### Technical Field

The present invention relates generally to the field of data context sharing. More particularly, it relates to sharing one or more available data contexts between a plurality of connections of a communication device.

### Background

Generally, in a communication device, such as a mobile telephone, a smartphone, a handheld computer or the like, there may be several applications that need access to the Internet. The number of simultaneous Internet connections that it is possible to set up may be limited. Thus, it may be troublesome if the number of simultaneously running applications that need Internet access is larger than the number of simultaneous Internet connections that it is possible to set up.

One possible way for applications of a mobile communication device to reach the Internet is via a PS (Packet Switched) Internet connection. A PS Internet connection needs a PDP (Packet Data Protocol) context to set up the connection.

Each Internet-needing application may be associated with an Internet account, and each Internet account may define an Internet account setting. The Internet account setting may define, for example, the APN (Access Point Name) to be used in the PDP context that provides the Internet connection.

It may, for example, be defined by the communication network how many simultaneous data contexts it supports. Different networks may support a different number of simultaneous data contexts. Currently, many networks support one or two simultaneous data contexts. The number of supported data contexts can also differ between radio access technologies (RAT), such as between GSM/GPRS (Global System for Mobile communications / General Packet Radio Service) and WCDMA (Wideband Code Division Multiple Access), which is employed e.g. in UMTS (Universal Mobile Telecommunications System) and UMTS LTE (UMTS Long Term Evolution).

Thus, the number of simultaneous data contexts that the network supports may be a resource bottleneck when it comes to setting up simultaneous Internet connections for applications of a communication device.

US 2006/0104246 A1 discloses a mobile communications device, which includes logic operable to conduct a data context associated with a first application of the mobile communications device with a data service network. The mobile communications device also includes logic operable to release the data context associated with the first application and establish a data context associated with a second application of the mobile communications device with the data service network responsive to one of the user executing a hold function and the second application requesting that a data context be associated therewith. The mobile communications device further includes logic operable to re-establish the data context associated with the first application responsive to one of the user executing a resume function, the second application releasing the data context associated therewith, data transmission within the data context associated with the second application ceasing for a first predetermined time period and a second predetermined time period elapsing.

One disadvantage with existing technology is that the available data context(s) are not used optimally.

Furthermore, it may be difficult to know, at the communication device, how many data contexts are supported by the network that the communication device is currently connected to. Thus, the number of supported data contexts may change when, for example, the communication device experiences a handover from WCDMA to GSM, from GSM to WCDMA, or from one network supplier to another.

Therefore, there is a need for improved methods and devices of sharing one or more available data contexts, each providing an Internet connection, between a plurality of applications of a communication device.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods and devices of sharing one or more available data contexts, each providing an Internet connection, between a plurality of connections of a communication device.

According to a first aspect of the invention this is achieved by a method of sharing one or more available data contexts, each providing Internet access, between a plurality of connections associated with applications of a communication device, wherein each of the plurality of connections is associated with an Internet account defining an Internet account setting. The method comprises determining whether any of the Internet accounts associated with the plurality of connections have the same Internet account setting; organising the plurality of connections into one or more groups based on the determination, wherein each group includes one or more of the plurality of connections as group members; assigning a group priority to each of the one or more groups; and using each of the one or more available data contexts to provide Internet access to the group members of one of the one or more groups based on the group priorities.

In some embodiments, the method may further comprise assigning a connection priority to each of the plurality of connections; and determining the group priority to be assigned to each of the one or more groups based on the connection priorities of the group members. The step of assigning a connection priority to each of the plurality of connections may comprise assigning a priority type to each of the plurality of connections; and mapping the priority type to a connection priority for each of the plurality of connections. The group priority to be assigned to each of the one or more groups may be determined as the highest of the connection priorities among the group members.

In some embodiments, the one or more available data contexts may be used to provide Internet access to the group members of the one or more groups that have the highest of the group priorities among the groups.

In some embodiments, the plurality of connections may be organised so that connections that are group members of the same group are associated with Internet accounts having the same Internet account setting.

In some embodiments, the method may further comprise determining, for each of the plurality of connections, whether sharing of data context is permitted; and forming, in response to determining that a connection does not permit sharing of data context, a group including the connection as its only group member.

In some embodiments, the method may further comprise, if the number of available data contexts is lower than the number of groups, forming a list of groups that are not provided with Internet access.

In some embodiments, the method may further comprise, when a new connection requires Internet access: determining whether the Internet account associated with the new connection has the same Internet account setting as the group members of any of the groups. If the Internet account associated with the new connection has the same Internet account setting as the group members of one of the groups, the new connection may be included as a group member in that group. If the Internet account associated with the new connection does not have the same Internet account setting as the group members of any of the groups, a new group may be formed including the new connection as a group member. The method may further comprise determining whether the new connection permits sharing of data context; and forming, in response to determining that the new connection does not permit sharing of data context, a new group including the new connection as its only group member. The method may further comprise updating the group priorities based on a connection priority assigned to the new connection. If a new group is formed, the method may further comprise requesting activation of a new data context; and, if the activation is successful, using the new data context to provide Internet access to the new group.

In some embodiments, the method may further comprise, when a connection provided with Internet access terminates its Internet access use, removing the connection from the group of which it is a group member. The method may further comprise updating the group priorities.

In some embodiments, the method may further comprise comparing group priorities to determine whether the group that has the highest group priority among the groups not provided with Internet access has higher group priority than at least one of the groups provided with Internet access. If the group that has the highest group priority among the groups not provided with Internet access has higher group priority than at least one of the groups provided with Internet access the method may further comprise requesting that the group members of the group that has the lowest group priority among the groups provided with Internet access terminate their Internet access use; releasing the data context used by the group members of the group that has the lowest group priority among the groups provided with Internet access; requesting activation of a data context replacing the released data context; and using the data context replacing the released data context to provide Internet access to the group that has the highest group priority among the groups not provided with Internet access. The comparing step may be performed when a data context is disconnected by a network action, when the group priorities have been updated and/or when a new group has been formed.

In some embodiments, the method may further comprise, when the group member of a group comprising a single group member is removed, requesting activation of a replacement data context, and using the replacement data context to provide Internet access to the group that has the highest group priority among the groups that are not provided with Internet access.

In some embodiments, the method may further comprise, when a handover occurs, requesting activation of a further data context, and, if the activation is successful, using the further data context to provide Internet access to the group that has the highest group priority among the groups that are not provided with Internet access. The handover may be one of a handover from one radio access technology to another radio access technology, a handover from one communication standard to another communication standard, a handover from one operator network to another operator network, and a handover from one cell to another cell.

According to a second aspect of the invention, a computer program product is provided. The computer program product comprises a computer readable medium, having thereon a computer program comprising program instructions. The computer program is loadable into a data-processing unit and adapted to cause the data-processing unit to execute method steps according to the first aspect when the computer program is run by the data-processing unit.

According to a third aspect of the invention, an arrangement is provided comprising sharing logic, and a communication platform. The sharing logic and the communication platform are adapted to perform the method according to the first aspect.

According to a fourth aspect of the invention, a communication device is provided comprising the arrangement according to the third aspect.

When referring to the sharing of available data contexts between connections, it should be understood that an application or client could, in fact, have several Internet connections running simultaneously. Thus, embodiments of the invention described below with reference to sharing of available data contexts between applications or clients are equally applicable to sharing of available data contexts between connections and vice versa.

One of the advantages of embodiments of the invention is that the available data contexts may be used in an efficient manner.

Formalization regarding which applications are offered an Internet connection may be achieved by using embodiments of the invention. The formalization may, according to embodiments of the invention, be achieved through grouping of connections and/or the use of connection priorities and/or group priorities.

By using embodiments of the invention, it may be optimized which applications are offered an Internet connection having regard to the number of available data contexts and the importance of the applications.

Another advantage of embodiments of the invention is that the available data contexts may be used in an efficient manner regardless of whether the number of available data contexts varies over time.

Another advantage of embodiments of the invention is that the end user gets a better user experience. Using many applications that require an Internet connection at the same time will be less cumbersome according to embodiments of the invention.

Another advantage of embodiments of the invention is that more applications that require Internet connectivity may be included into the communication device. Using embodiments of the invention, more applications may not lead to more error messages due to connectivity problems.

Embodiments of the invention provide for optimization in the situation when the number of data contexts differs over time.

Embodiments of the invention also provide for the option to try to set up a new group of connections when a RAT change is experienced.

### Brief Description of the Drawings

Further objects, features and advantages of the invention will appear from the following detailed description of embodiments of the invention, with reference being made to the accompanying drawings, in which:
Fig. 1A is a schematic drawing illustrating a mobile terminal connected, through a radio link, to a base station site, wherein the mobile terminal may comprise logic according to some embodiments of the invention;
Fig. 1B is diagram illustrating a message flow according to some embodiments of the invention;
Fig. 2 is a flowchart illustrating example method steps according to some embodiments of the invention;
Fig. 3 is a schematic diagram illustrating the application of group priorities according to some embodiments of the invention;
Fig. 4 is a schematic diagram illustrating the application of group priorities according to some embodiments of the invention;
Fig. 5 is a schematic diagram illustrating the application of group priorities according to some embodiments of the invention;
Fig. 6 is a diagram illustrating a message flow according to some embodiments of the invention;
Fig. 7 is a flowchart illustrating example method steps according to some embodiments of the invention;
Fig. 8 is a flowchart illustrating example method steps according to some embodiments of the invention;
Fig. 9 is a flowchart illustrating example method steps according to some embodiments of the invention;
Fig. 10 is a flowchart illustrating example method steps according to some embodiments of the invention; and
Fig. 11 is a flowchart illustrating example method steps according to some embodiments of the invention.

### Detailed Description

In the following, embodiments of the invention will be described that obtain efficient use of the available data contexts (e.g. PDP contexts). Sharing the available data contexts may be one instrument in obtaining efficient use of the available data contexts. Internet connections based on the same account settings may share the same data context. In this way it is possible for several applications to make simultaneous Internet connections. In general, it may not be possible to share the same data context if the Internet account settings are not the same.

Thus, according to some technologies, it will not be possible for applications to reach the Internet if they need different Internet account settings than the currently connected applications, and the network does not support any more data contexts. For example, if one application has a PS Internet connection through a data context and the network only supports one data context; it will not be possible for other applications that need different Internet account settings (e.g. different APN) to reach the Internet.

It is noteworthy that it is quite common that operators have different APN for different types of applications (e.g. one APN for MMS (Multimedia Messaging Protocol) and a different APN for Browsing).

Imagine, as an example, that a user of a mobile telephone has a phonebook application that includes presence information regarding the user's friends. An Internet connection on a certain APN is needed for the presence functionality. When the user is in a network were only one PDP context is supported, the user is not able to use the web browser to browse the Internet if the web browser needs an Internet connection on another APN than the APN that the presence application is using. In situations like this, the mobile telephone might display an error message explaining that there was a problem with accessing the network.

As explained before, it may be difficult to know, at the communication device, how many data contexts are supported by the network that the communication device is currently connected to. Thus, the number of supported data contexts may change when, for example, the communication device experiences a handover from WCDMA to GSM, from GSM to WCDMA, or from one network supplier to another.

In embodiments of the invention, sharing the available data contexts may be one instrument in obtaining efficient use of the available data contexts as mentioned above. Assigning priorities to the different connections or applications may be another instrument in obtaining efficient use of the available data contexts. The priorities may represent the importance of the connection or application.

In some embodiments of the invention, a communication device comprises logic, such as an Internet connection sharing logic, that determines which of the applications should be allowed to use the data context resources at a certain time. The logic may make the determination based on Internet connection priorities of the different applications.

According to some embodiments of the invention, the task of sharing the available data contexts between connections or applications can be viewed as a scheduling task, with the resources to distribute being the available data contexts.

In some embodiments of the invention, determination regarding which of the connections should be allowed to use the data context resources is based on priorities of the connections. In some embodiments, the determination is based on which Internet account should be used for each connection. In some embodiments, the determination is based on information regarding if an application or connection is willing to share its data context with other applications or connections.

In some embodiments of the invention, the priority that the application specifies in a connection request to the Internet connection sharing logic may not be the actual priority value (such as 0, 1, 2 or 5). Instead, the application may, in such embodiments, use a priority type (such as PriorityTypeBrowsing, PriorityTypeMms, PriorityTypeStreaming, PriorityTypeEmail, and PriorityTypePresence). In such embodiments, the Internet connection sharing logic may map a priority type to an actual priority value. In these embodiments, the application or clients do not need to be aware of the priority values that should be used for a particular connection. Furthermore, if adjustment of the priority values should be desirable, the actual mapping from priority type to priority value may be changed in a single place instead of having to change the priority values in each application.

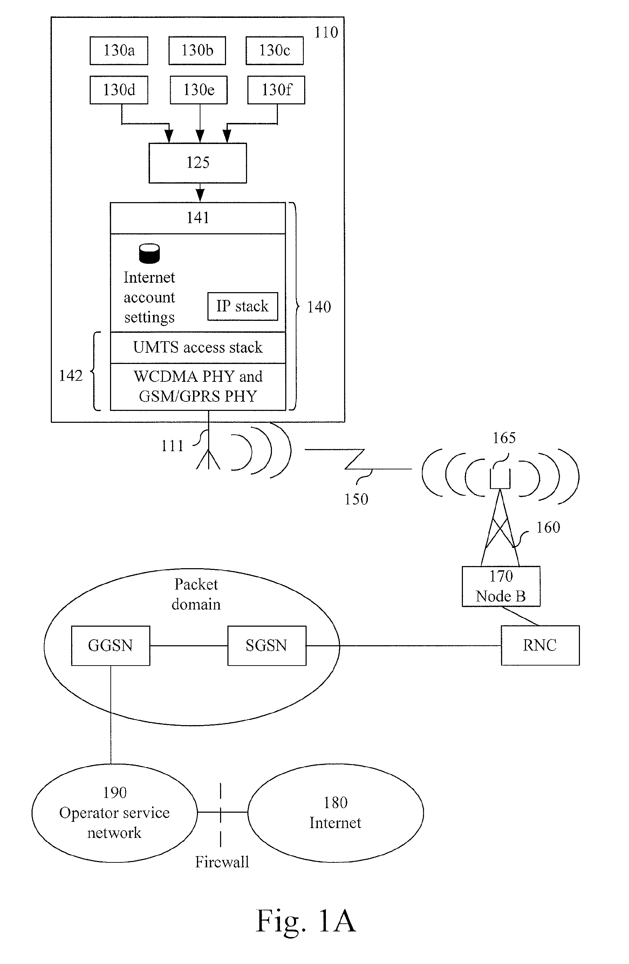

Figure 1A schematically illustrates a communication device or mobile terminal 110, such as a UE (User Equipment), comprising Internet connection sharing logic 125 according to some embodiments of the invention. In the illustrated embodiment, the logic 125 is located between the applications 130a-f that need to set up Internet connections and the software that performs data context activation requests in the platform 140 of the communication device. In this embodiment, all connection requests from the applications 130a-f go via the Internet connection sharing logic 125. The Internet sharing logic 125 may, if it finds that it is required, ask the platform 140 to setup an Internet connection. This may be done via the platform OPA (Open Platform API (Application Programmable Interface)) 141.

The platform 140 may further comprise an IP (Internet Protocol) stack, an Internet account settings database, and a network signaling part 142. The network signaling may comprise an UMTS access stack, WCDMA PHY and GSM/GPRS PHY.

This example mobile terminal 110 comprises an antenna 111. The antenna 111 may be mounted on the housing of the mobile terminal 110. Alternatively, the antenna may be an internal antenna mounted within the housing of the mobile terminal 110. The mobile terminal 110 may even comprise multiple antennas. The mobile terminal 110 may further comprise a display, a keypad, a loudspeaker, and a microphone, which together provides a man-machine interface for operating the mobile terminal 110.

The mobile terminal 110 is connected, through a radio link 150, to a base station site 160. The base station site 160 comprises one or more antennas 165 and at least one base station 170.

A user of the mobile terminal 110 may use conventional circuit-switched telecommunication services such as voice calls, data calls, video calls, and fax transmissions, and/or packet-based services such as electronic messaging, VoIP, Internet browsing, electronic commerce, etc. To this end, the mobile terminal 110 and the base station 170 may be compliant with at least one mobile telecommunication standard, for instance GSM (Global System for Mobile communications), UMTS (Universal Mobile Telecommunications System) or UMTS LTE (UMTS Long Term Evolution).

Thus connected, the mobile terminal 110 can access the Internet 180 via the operator service network 190.

When an application 130a-f makes an Internet connection request to the Internet connection sharing logic 125 in this embodiment, it specifies three parameters, namely: the priority of the connection, the Internet account (which contains all the settings that are needed for a data (PDP) context activation, e.g. APN), and a parameter (which may be denoted SharingAllowed) indicating if the application is willing to share the data context used for the connection with another application or connection. Using these parameters, the logic 125 determines which applications should be offered Internet connection at each specific moment in time, for example by using one or more of the methods that will be described further on.

As the mobile terminal 110 may not know in advance how many data contexts the network supports at a certain time, the logic 125 may apply a trial-and-error scheme. When a client application 130a-f makes a request for an Internet connection, the logic 125 may first determine whether it can use an existing data context (i.e. if the Internet account settings are the same as for any of the existing data contexts and the applications involved are willing to share data context). If sharing is not possible, the logic 125 may try to activate a new data context. If the activation of a new data context fails (e.g. because the network does not support more data contexts that those already active) the logic 125 determines which actions to perform, for example by using one or more of the methods that will be described further on.

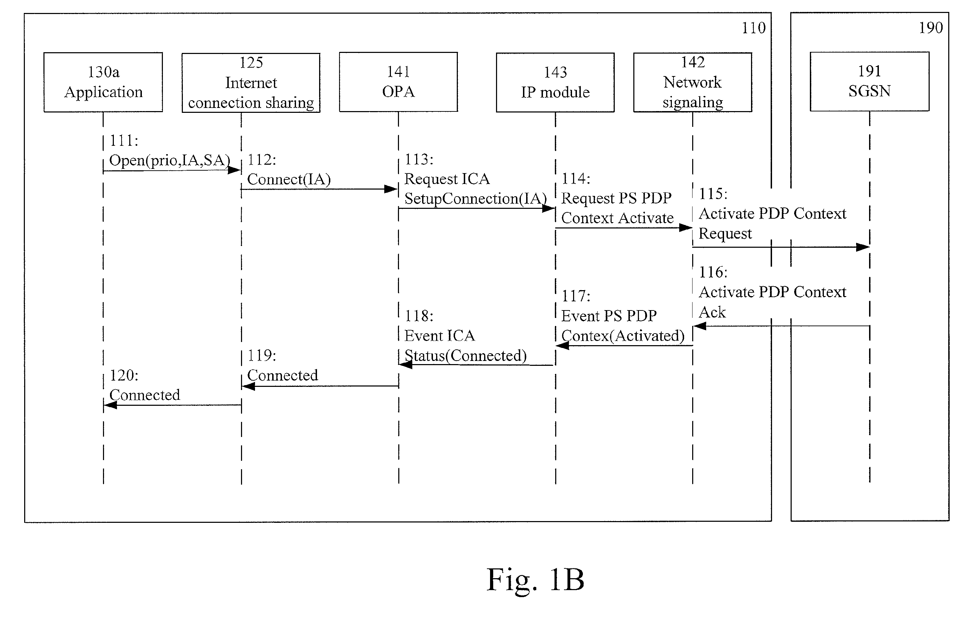

Figure 1B illustrates an example message flow within the mobile terminal 110 and between the mobile terminal 110 and the network 190. In some embodiments, the network is represented by a Serving GPRS Support Node (SGSN) 191.

In this example message flow, an application (e.g. application 130a) calls the Internet connection sharing logic 125 to open an Internet connection as is illustrated at 111. In the open call the application may specify three parameters (priority, SharingAllowed (SA) and Internet account (IA)).

The Internet connection sharing logic 125 evaluates the open request. If the Internet connection sharing logic 125 finds that it is required, it asks the platform 140 to set up an Internet connection. This may be done via the platform OPA 141, and is illustrated at 112.

At 113 OPA 141 instructs the IP module 143 to set up a connection. This instruction may comprise a request to the Internet connection and account manager (ICA) to set up a connection using the Internet account settings. At 114 the IP module 143 asks the network signaling part 142 of the platform 140 to activate a data context if this is needed.

The network signaling part 142 handles the activation of the data context against the network as is illustrated at 115 and 116, and a successful activation is reported back to the application 130a as illustrated at 117, 118, 119 and 120.

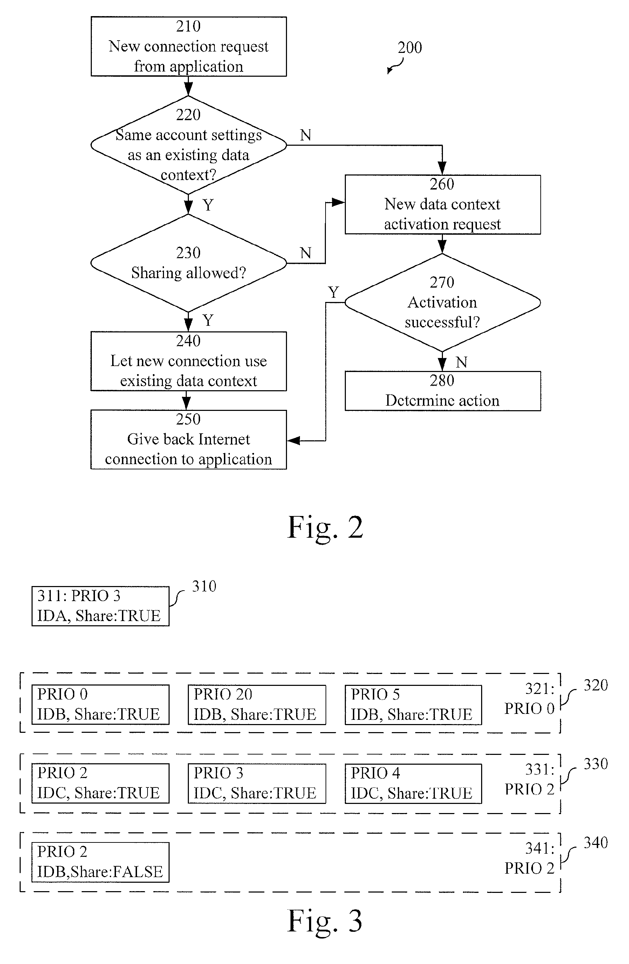

Figure 2 illustrates an example method 200 according to some embodiments of the invention. The method 200 may be performed when an application makes a new connection request. In step 210, a new connection request is made from an application. In step 220, the settings of the Internet account of the application are compared to the settings of the already existing data contexts (if any).

If the Internet account settings of the application matches any of the existing data contexts (YES-path out of step 220), then the process continues to step 230, where it is determined if the application allows data context sharing. It is also determined, in step 230, if the application that is using the matching existing data context allows sharing. (If several applications are using the matching existing data context it is implicit that they allow sharing.)

If sharing is allowed by all involved applications (YES-path out of 230), then the application requesting a new connection is grouped together with the application(s) using the matching existing data context in step 240, and the application requesting a new connection is provided with Internet connection through the matching existing data context in step 250. In some embodiments, the priority of the group may be updated based on the priority of the application requesting a new connection as will be explained later.

If the Internet account settings of the application does not match any of the existing data contexts (NO-path out of step 220) or if sharing is not allowed by all involved applications (NO-path out of step 230), then activation of a new data context is requested in 260.

If the data context activation is successful (YES-path out of step 270), then the application requesting a new connection is provided with Internet connection through the new data context in step 250.

If the data context activation is not successful (NO-path out of step 270), then it is determined in step 280 which actions to perform, for example by using one or more of the methods that will be described further on. For example, the Internet connection sharing logic may be used in step 280 to determine whether the new connection should be put in a waiting list or if an existing connection should be disconnected in favor of the new connection.

According to embodiments of the invention, applications or connections are grouped together to facilitate the determination of which applications should be offered Internet access via the available data contexts at a given time. A group may, for example, comprise all connections that can share the same data context. Since Internet accounts with different settings will have to use different data contexts, connections based on different Internet account settings (e.g. different APN) may belong to different groups. Connections based on the same Internet account settings may belong to the same group if they all have the SharingAllowed-flag set to TRUE. A connection that has the SharingAllowed-flag set to FALSE may always be in its own group. Each group may be assigned a group priority. The group priority may, for example, be equal to the priority of the connection having the highest priority among the members in the group.

The grouping approach is used in embodiments of the invention to keep track of both connected connections (i.e. connections provided with Internet access) and connections that are waiting to be connected (i.e. connections that have not yet been provided with Internet access).

In embodiments of the invention, the number of groups with connected connections will be equal to the number of data contexts that are used. The number of groups of waiting connections may depend on the number of applications trying to set up connections, and to what extent these connections can be grouped together with each other or with any of the connected connections.

If there are not enough available resources (e.g. supported data contexts), a new connection request from an application to the Internet connection sharing logic may result in a new data context activation request that fails according to embodiments of the invention (see e.g. NO-path out of step 270 in Figure 2). When this occurs, the priority of the new connection is compared, in some embodiments, to the group priorities of the groups of existing connections.

If the priority of the new connection is lower than the group priority of all of the groups of existing connections, the new connection may be put in the list of waiting connections. If the priority of the new connection is equal to the lowest group priority of the groups of existing connections, the new connection may, in some embodiments, also be put in the list of waiting connections. In these cases, no existing connections will be requested to disconnect.

If the priority of the new connection is higher than the group priority of at least one of the groups of existing connections, the connections in the group having the lowest group priority of the groups of existing connections may be requested to disconnect. When all connections in that group have disconnected, the associated data context may be released and a new data context activation request may be made for the new connection. According to some embodiments, the same applies if the priority of the new connection is equal to the lowest group priority of the groups of existing connections.

In some embodiments, it is also determined whether the new connection should be added to a group, which is already in the waiting list. In such a case, the priorities are updated and then follows the comparison as described above.

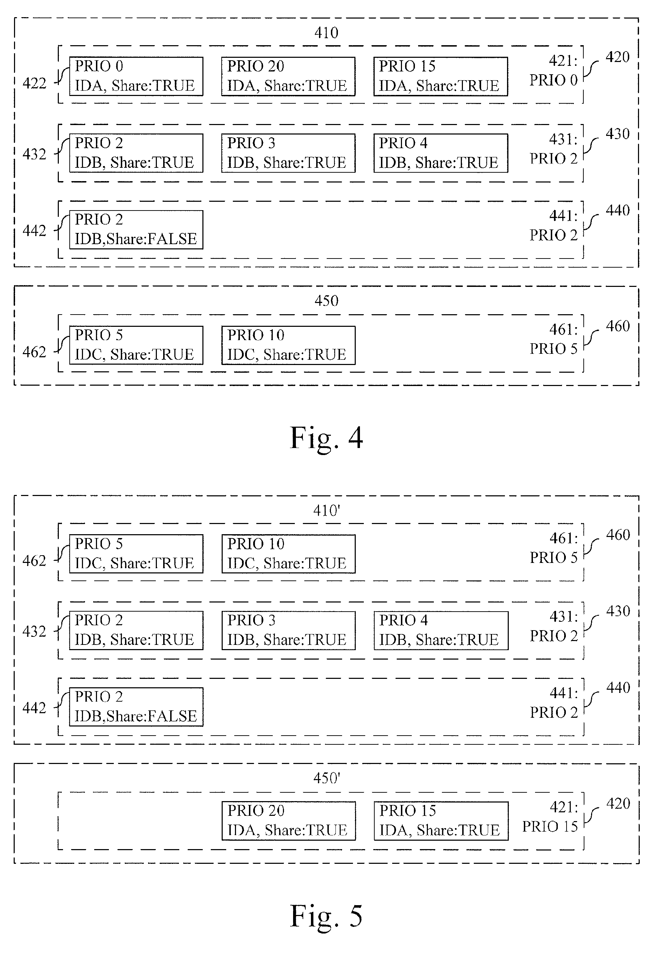

Figure 3 illustrates comparison of group priorities according to some embodiments of the invention. In Figure 3, as well as in Figures 4 and 5, a lower priority number denotes higher priority (i.e. more important). Furthermore, it is understood that three data contexts are available in the examples illustrated in Figures 3, 4 and 5. In the example in Figure 3, the new connection 310 has a lower priority 311 than the group priority 321, 331, 341 of all of the groups 320, 330, 340 of existing connections. Hence, the new connection 310 may be put in the list of waiting connections if the new data context activation request failed (because no more data contexts were available), and no existing connections will be requested to disconnect.

Figure 4 illustrates comparison of group priorities according to some embodiments of the invention. Figure 4 shows both an example list 410 of groups 420, 430, 440 provided with Internet access via existing connections and an example list 450 of groups 460 of clients that are waiting for a connection.

It may be noted that group 420 has a group priority 421 of 0 (highest priority), since the connection 422 has a priority that is equal to 0, which is the highest priority among the members of the group. In the same manner, group 430 has a group priority 431 of 2, since the connection 432 has a priority that is equal to 2, which is the highest priority among the members of the group. Group 440 has a group priority 441 of 2, since the only connection 442 in the group has a priority that is equal to 2. Group 460 has a group priority 461 of 5, since the connection 462 has a priority that is equal to 5, which is the highest priority among the members of the group. Since the group priority 461 is lower than the group priorities 421, 431, 441 of all of the groups of existing connections, group 460 has been put in the list 450 of groups that are waiting for a connection.

If the client that has connection 422 voluntarily closes its Internet connection (e.g. because it is no longer using it), the group priority 421 of group 420 will change to 15, which is now the highest priority among the members of the group. According to this example embodiment, group priorities are compared each time a client voluntarily closes a connection. Thus, the waiting connections of group 460 should now be connected instead of the connections of group 420 because the group priority 461 is now higher than the group priority 421.

Figure 5 illustrates the example list 410' of groups provided with Internet access via existing connections and the example list 450' of groups of clients that are waiting for a connection, after the waiting connections of group 460 have been connected instead of the connections of group 420. The groups 430, 440, 460 are now provided with Internet access. All connections of group 420 have been disconnected and group 420 is now waiting for a connection.

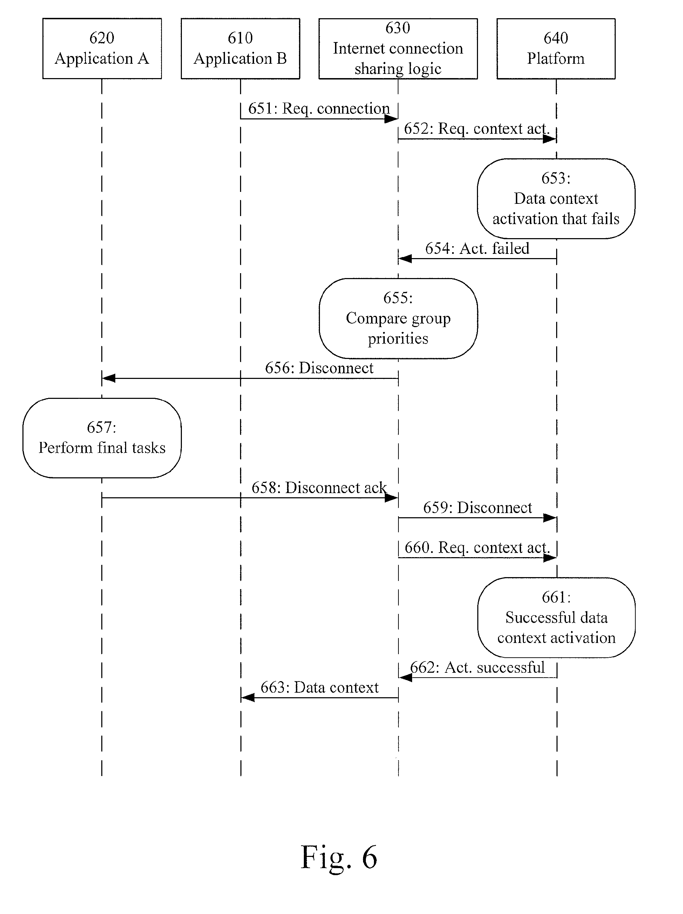

Figure 6 illustrates an example message flow according to some embodiments of the invention when an application 610 requests a new Internet connection via the Internet connection sharing logic 630. This request is illustrated at 651, and may comprise an Open Internet connection message comprising parameters specifying the priority of the connection, the Internet account and whether sharing is allowed or not (e.g. via a SharingAllowed-flag). In some embodiments it is implicit from which application the request comes, and in some embodiments the Open Internet connection message also comprises an application parameter specifying the application 610.

In this example, another application 620 is already connected to the Internet via a data (PDP) context. When the request 651 is received by the Internet connection sharing logic 630, the Internet connection sharing logic 630 may determine that the application 610 does not have the same Internet account settings as the application 620 and thus requires a different data context. Alternatively or additionally, the Internet connection sharing logic 630 may determine that the application 610 and/or the application 620 do not allow data context sharing. Hence, the application 610 is organized in a group separate from application 620 and a new data context activation request 652 is sent from the Internet connection sharing logic 630 to the platform 640 of the communication device (compare with step 260 in Figure 2). This request may comprise a Connect Internet connection message with a parameter specifying the Internet account to be used for the connection.

At 653, the platform 640 makes a data context activation to the network, which fails because the network only supports one data context in this example (compare with NO-path out of step 270 in Figure 2). The Internet connection sharing logic 630 is notified of the failed connection attempt associated with application 610 at 654.

At 655, the Internet connection sharing logic 630 compares the group priorities of the groups containing applications 610 and 620 respectively. In this example, the groups each contain only one group member. The Internet connection sharing logic 630 determines that application 610 (or in effect the group comprising application 610) should be prioritized over application 620 (or in effect the group comprising application 620).

Hence, all the applications 620 in the latter group are requested to disconnect their Internet connection at 656. This request may comprise a Disconnect message. At 657, application 620 may perform any tasks, which are necessary to perform before disconnection. Such tasks may, for example, comprise performing un-registration from a server. Application 620 may still use the Internet connection to perform such tasks. Then, application 620 acknowledges the disconnection request at 658 to the Internet connection sharing logic 630, which requests that the platform 640 disconnects the Internet connection associated with application 620 at 659.

The Internet connection sharing logic 630 may then send a new data context activation request 660 to the platform 640 (compare with 652). At 661, the platform 640 makes a data context activation to the network, which now succeeds. The Internet connection sharing logic 630 is notified of the successful connection attempt associated with application 610 at 662, and the Internet connection is delivered to application 610 at 663.

It has now been described how a request for a new Internet connection from an application may trigger a comparison of group priorities and how a voluntarily closing of an Internet connection may trigger an update and a comparison of group priorities. Other events or actions may, however, also trigger updates and/or comparisons of the group priorities according to embodiments of the invention as will be explained in the following.

As mentioned before, when there is a new connection request from a client that fails, due to that there are no resources (data contexts) available, embodiments of the invention will compare the priority of the new connection request with group priorities of groups provided with Internet access via existing connections.

If the new connection request has higher priority than at least one of the groups provided with Internet access, then all connections in the group with the lowest group priority among the groups provided with Internet access will be asked to disconnect. When all the connections have disconnected the group will be kept in the list of waiting connections.

It is also noteworthy that if the new connection request has a high priority and is thus connected, then this might make it possible for a group with lower group priority, which is in the waiting list, to include the new connection in the group if the Internet account setting fit and sharing is allowed. By doing so this group will get a higher priority (based on the priority of the new connection) and will be able to use the same data context as the new connection.

If the new connection request has lower priority than all of the groups provided with Internet access, then the new connection request will be put in the list of waiting connections (either as a new group including only the new connection or as a member of another group already in the waiting list) and no existing connections will be asked to disconnect.

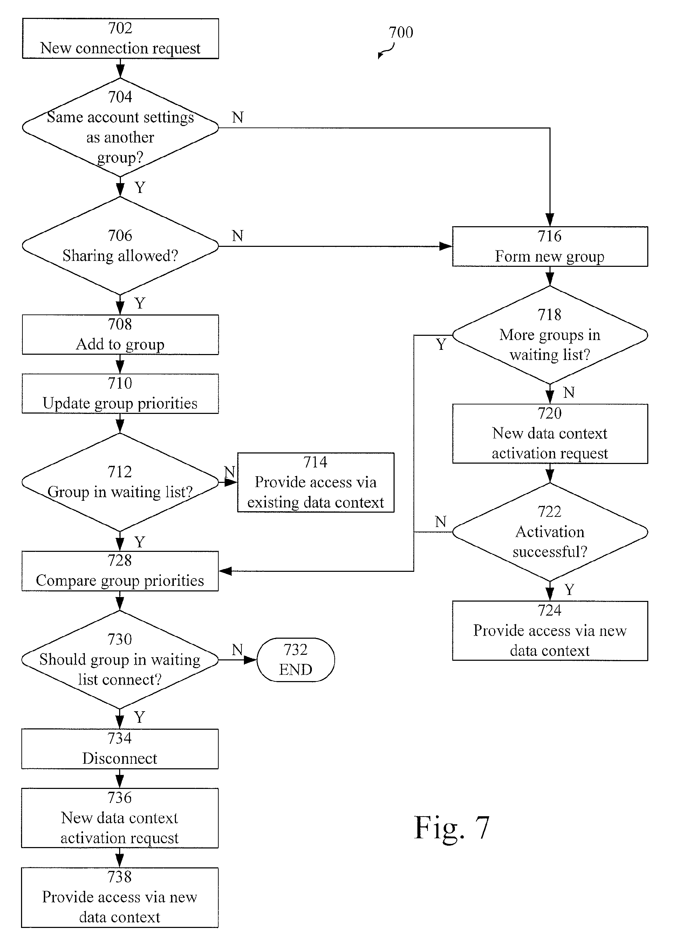

Figure 7 illustrates an example method 700 according to some embodiments of the invention. The method 700 may be performed when an application makes a new connection request. In step 702, a new connection request is made from an application. In step 704, the settings of the Internet account of the application are compared to the settings of the already existing data contexts (if any). In some embodiments, the settings of the Internet account of the application are also compared to the Internet account settings of the groups in the waiting list.

If the Internet account settings of the application finds a match (YES-path out of step 704), then the process continues to step 706, where it is determined if the application allows data context sharing. It is also determined, in step 706, if the matching application allows sharing. (If there are several members in the matching group it is implicit that they allow sharing.)

If sharing is allowed by all involved applications (YES-path out of 706), then the application requesting a new connection is included in the matching group in step 708, and the group priorities are updated in step 710. In particular, the priority of the group, which now has a new member, should be updated.

In step 712, it is then determined if the group, to which the new connection was added, was in the waiting list. If it was not in the waiting list (NO-path out of step 712), then the application requesting a new connection is provided with Internet connection through the matching existing data context in step 714. If, however, it was in the waiting list (YES-path out of step 712), then the process continues to step 728.

In step 728, group priorities are compared, and in step 730 it is determined whether the group having the highest priority among the groups in the waiting list has a higher priority than any of the groups now provided with Internet access. If that is not the case (NO-path out of step 730), the process ends in step 732. If, however, that is the case (YES-path out of step 730), then the process continues to step 734 where all of the connections in the group having the lowest priority among the groups provided with Internet access are requested to disconnect. The corresponding data context is released and the disconnected group is moved to the waiting list.

In step 736, a new data context activation is requested, and in step 738, the new data context is used to provide Internet access to the group having the highest priority among the groups in the waiting list.

If the Internet account settings of the application do not find a match (NO-path out of step 704) or if sharing is not allowed by all involved applications (NO-path out of step 706), then, in step 716, a new group is formed comprising the new connection and this group is put in the waiting list.

In step 718, it is determined if there are any more groups in the waiting list. If there are more groups in the waiting list (YES-path out of step 718), then the process continues to step 728, where it is determined whether the group having the highest priority among the groups in the waiting list has a higher priority than any of the groups now provided with Internet access as explained above. If, however, there are no more groups in the waiting list (NO-path out of step 718), then the process continues to step 720.

In step 720, activation of a new data context is requested. If the data context activation is successful (YES-path out of step 722), then the application requesting a new connection is provided with Internet connection through the new data context in step 724.

If the data context activation is not successful (NO-path out of step 722), then the process continues to step 728, where it is determined whether the new group has a higher priority than any of the groups now provided with Internet access as explained above.

As mentioned before, the group priority of a group where one group member (e.g. a client with an existing connection) voluntarily closes its connection may be updated according to some embodiments of the invention. Thus, the group priority of this group may change. Then, the priorities of the groups in the list of waiting connections are compared to the priorities of the groups in the list of existing connections. This may trigger that a group using an existing data context is asked to disconnect in favor for a group in the waiting list that now has a higher group priority than the former group.

It may also be determined if the connection that was closed was the only connection in its group. If it was, a data context should now be free. The group in the waiting list having the highest group priority may use this free data context.

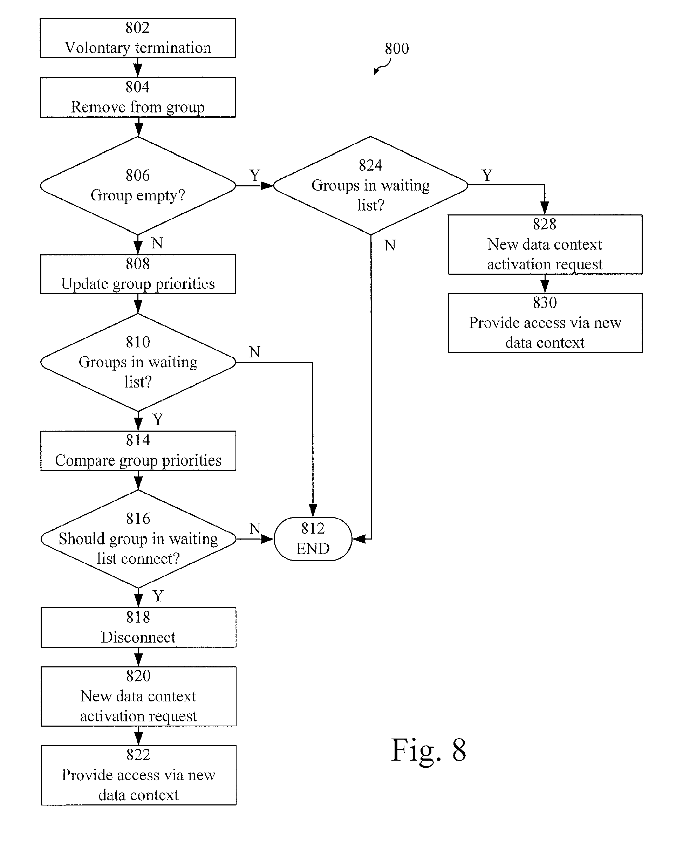

Figure 8 illustrates an example method 800 according to some embodiments of the invention. In step 802, a group member of a group provided with Internet access voluntarily closes its connection, and in step 804, this group member is removed from the group.

In step 806, it is determined whether or not the group is now empty (i.e. if the connection that was closed was the only connection in its group).

If the group is not empty (NO-path out of step 806), the process continues to step 808, where the group priorities are updated. In particular, the priority of the group which had a member removed should be updated.

In step 810, it is determined if there are any connections that are waiting to be connected (i.e. if the waiting list contains any groups). If the waiting list is empty (NO-path out of step 810), then the process ends in step 812. If, however, there are groups in the waiting list (YES-path out of step 810), then the process continues to step 814.

In step 814, group priorities are compared, and in step 816 it is determined whether the group having the highest priority among the groups in the waiting list has a higher priority than any of the groups now provided with Internet access. If that is not the case (NO-path out of step 816), the process ends in step 812. If, however, that is the case (YES-path out of step 816), then the process continues to step 818 where all of the connections in the group having the lowest priority among the groups provided with Internet access are requested to disconnect. The corresponding data context is released and the disconnected group is moved to the waiting list.

In step 820, a new data context activation is requested, and in step 822, the new data context is used to provide Internet access to the group having the highest priority among the groups in the waiting list.

If the group is empty after the group member that voluntarily closed its connection was removed from the group (YES-path out of step 806), then there should be a free data context. The process continues to step 824, where it is determined if there are any connections that are waiting to be connected (i.e. if the waiting list contains any groups). If the waiting list is empty (NO-path out of step 824), then the process ends in step 812. If, however, there are groups in the waiting list (YES-path out of step 824), then the process continues to step 828.

In step 828, a new data context activation is requested. In step 830, the new data context is used to provide Internet access to the group having the highest priority among the groups in the waiting list.

If, for example, the communication device uses two simultaneous data contexts, and then moves from an environment that supports two simultaneous data contexts to an environment that supports only one simultaneous data context, then the network disconnects the connections associated with one of the two data contexts. When the network disconnects a group the disconnected group may be put in the list of waiting connections.

In some embodiments, the network does not consider group priorities when disconnecting the connections. Thus, a disconnection of a group by the network may trigger a comparison of group priorities between the groups in the waiting list and the groups provided with Internet access. In this manner it may be guaranteed that, if the network has disconnected one or more high priority connections and left low priority connections connected, then the high priority connections may be re-connected by requesting that connections in low-priority groups disconnect.

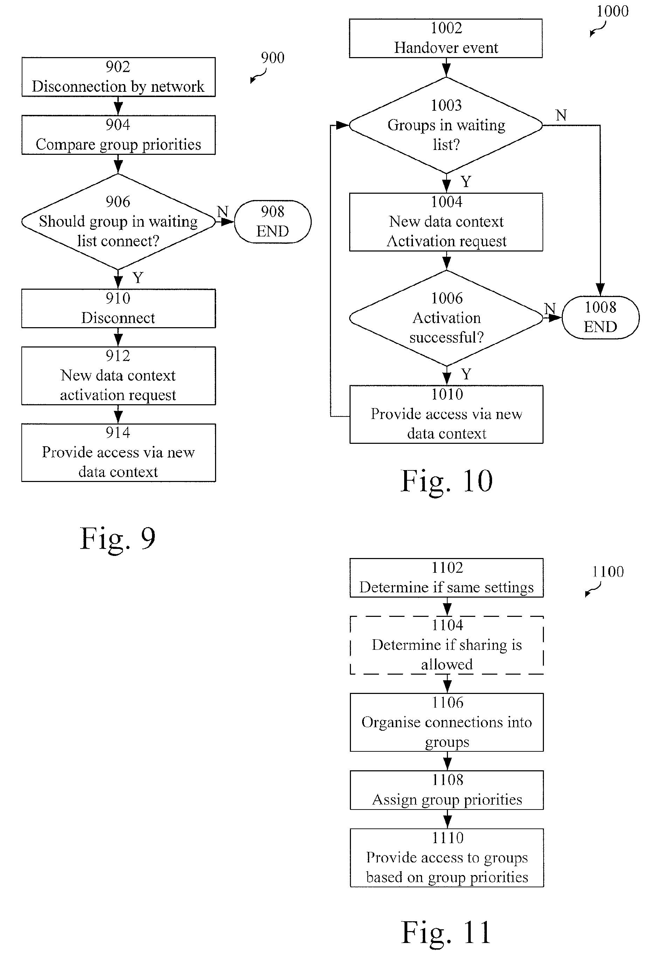

Figure 9 illustrates an example method 900 according to some embodiments of the invention. In step 902, the network disconnects a group provided with Internet access. The disconnected group is moved to the waiting list.

In step 904, group priorities are compared, and in step 906 it is determined whether the group having the highest priority among the groups in the waiting list has a higher priority than any of the groups now provided with Internet access. If that is not the case (NO-path out of step 906), the process ends in step 908. If, however, that is the case (YES-path out of step 906), then the process continues to step 910 where all of the connections in the group having the lowest priority among the groups provided with Internet access are requested to disconnect. The corresponding data context is released and the disconnected group is moved to the waiting list.

In step 912, a new data context activation is requested, and in step 914, the new data context is used to provide Internet access to the group having the highest priority among the groups in the waiting list.

If more than one group were disconnected by the network, steps 904-914 may be iterated.

When a determination has been made that one or several connections should be disconnected in favor for other connections in some embodiments of the invention (see, for example, steps 734, 818, 910), the selected existing connections may be asked to disconnect. The clients that own these existing connections may do any necessary un-registration that they might need to do (e.g. un-register from a presence server) and then acknowledge the disconnection request with a call to the Internet connection sharing logic.

A new connection request from a client that which is issued while the Internet connection sharing logic is waiting for clients to acknowledge a disconnect request may be put in the list of waiting connections (either as a group of its own or as a member of another group in the list). It may be put in the waiting list independently of its priority.

Clients that ask for a connection while the Internet connection sharing logic is waiting for clients to acknowledge a disconnect request may be sent back the result that they will be connected when other clients have been disconnected. The Internet connection sharing logic may be able to keep track of which of the clients that have been sent this default answer.

In some embodiments, the group priorities may then be updated and/or compared when all clients in a group that have been asked to disconnect have in fact disconnected (e.g. when the Internet connection sharing logic has got the acknowledge message from all clients in the group). In this way, the new connections that were put in the waiting list are also evaluated to see if they should be connected. Updated information may be sent to the clients that will not be connected at the moment.

With reference to the methods in Figures 7, 8 and 9, this additional feature might manifest itself as a number of extra method steps just after steps 734, 818 and 910 respectively. In these extra steps, group priorities of groups in the waiting list might be compared and it might be determined whether the group having the highest priority in the waiting list has now changed. If that is the case, this group should be provided with Internet access instead of the group that was previously determined. In some of these embodiments, the processes may then return to steps 728, 814 and 904 respectively to ensure that there are no groups in the waiting list with higher priority than any of the groups now provided with Internet access.

Networks for different radio access technologies (RAT) may support a different amount of simultaneous data contexts. Thus, if the communication device experiences a RAT HO (Handover), e.g. that the RAT is changed from WCDMA to GPRS, then there is a possibility that the number of supported data contexts have changed.

If the number of supported data contexts has become less, the network may disconnect one or more groups as explained above.

To fully exploit the network resources, such a handover event may, some embodiments of the invention, trigger a new data context activation request. If the request is successful, the resulting connection is used to provide Internet access to the group in the waiting list with the highest priority. More new data context activation requests may be tried until they fail to fully exploit the case when the difference in the amount of simultaneous data contexts is more than one.

Examples of other handover events that may trigger this functionality are a handover from one communication standard to another communication standard (such as from GSM to UMTS or UMTS LTE and vice versa), a handover from one operator network to another operator network, or a handover from one cell to another cell.

Figure 10 illustrates an example method 1000 according to some embodiments of the invention. In step 1002, a handover event occurs. In step 1003, it is checked whether there are any groups with connections waiting to be connected. If the waiting list is empty (NO-path out of step 1003) the process ends in step 1008. If the waiting list is not empty (YES-path out of step 1003) the process continues to step 1004.

In step 1004, a new data context activation is requested, and in step 1006 it is determined whether the requested data context activation was successful.

If the requested data context activation was not successful (NO-path out of step 1006) that probably means that there are no more available data contexts and the process ends in step 1008.

If the requested data context activation was successful (YES-path out of step 1006) then the process continues to step 1010. In step 1010, Internet access is provided to the group having the highest priority among the groups in the waiting list via the newly activated data context and the process returns to step 1003.

Figure 11 illustrates an example method 1100 according to some embodiments of the invention. In step 1102 it is determined which of a number of connections or requested connections have the same Internet account settings. In step 1104 it is determined whether the connections or requested connections that have the same Internet account settings allow data context sharing. In some embodiments, there is not possibility to refrain from data context sharing, and in such embodiments, step 1104 is simply bypassed.

In step 1106 the connections or requested connections are grouped together based on the determinations made in step 1102 and 1104. In some embodiments, the connections and requested connections that have the same Internet account setting are organized into the same group. Connections and requested connections that do not permit data context sharing may be organized into groups comprising a single connection or requested connection.

In step 1108, each group is assigned a group priority. In some embodiments, the group priority is based on priorities of each of the connections or requested connections. The group priority may, for example, be equal to the highest priority of the connections or requested connections of the group.

In step 1110, the available data contexts are used to provide Internet access to the connections or requested connections of one or more of the groups. Internet access may, for example be provided to the connections or requested connections of the group or groups that have the highest priority. The number of groups whose connections or requested connections are provided with Internet access may be less than or equal to the number of available data contexts.

By employing embodiments of the invention, it is possible to use the available data contexts in a way, which is more efficient from the applications' point of view.

By employing embodiments of the invention, end users get a better user experience since it will be easier to use many applications that require an Internet connection at the same time.

By employing embodiments of the invention, it is possible to include more applications that require Internet connectivity.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, or by specialized circuits such as for example application-specific integrated circuits (ASIC). All such forms are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a pager, a communicator, an electronic organizer, a smartphone, a computer, an embedded drive, a mobile gaming device, or a (wrist) watch.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 2, 7-11.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the invention is construed to be limited by the appended claims and all reasonable equivalents thereof.

## Claims

1. A method of sharing one or more available data contexts, each providing Internet access, between a plurality of connections associated with applications of a communication device, wherein each of the plurality of connections is associated with an Internet account defining an Internet account setting, comprising:
determining (1102) whether any of the Internet accounts associated with the plurality of connections have the same Internet account setting;
organising (1106) the plurality of connections into one or more groups based on the determination, wherein each group includes one or more of the plurality of connections as group members;
assigning (1108) a group priority to each of the one or more groups; and
using (1110) each of the one or more available data contexts to provide Internet access to the group members of one of the one or more groups based on the group priorities.

2. The method of claim 1, further comprising:
assigning a connection priority to each of the plurality of connections; and
determining the group priority to be assigned to each of the one or more groups based on the connection priorities of the group members.

3. The method of claim 2, wherein the step of assigning a connection priority to each of the plurality of connections comprises:
assigning a priority type to each of the plurality of connections; and
mapping the priority type to a connection priority for each of the plurality of connections.

4. The method of any of claims 2 through 3, wherein the group priority to be assigned to each of the one or more groups is determined as the highest of the connection priorities among the group members.

5. The method of any of claims 1 through 4, wherein the one or more available data contexts are used to provide Internet access to the group members of the one or more groups that have the highest of the group priorities among the groups.

6. The method of any of claims 1 through 5, wherein the plurality of connections are organised so that connections that are group members of the same group are associated with Internet accounts having the same Internet account setting.

7. The method of any of claims 1 through 6, further comprising:
determining (1104), for each of the plurality of connections, whether sharing of data context is permitted; and
forming, in response to determining that a connection does not permit sharing of data context, a group including the connection as its only group member.

8. The method of any of claims 1 through 7, further comprising, if the number of available data contexts is lower than the number of groups, forming a list (450, 450') of groups that are not provided with Internet access.

9. The method of any of claims 1 through 8, further comprising, when a new connection requires Internet access (210, 702):
determining (220, 704) whether the Internet account associated with the new connection has the same Internet account setting as the group members of any of the groups;
if the Internet account associated with the new connection has the same Internet account setting as the group members of one of the groups, including (240, 708) the new connection as a group member in that group; and
if the Internet account associated with the new connection does not have the same Internet account setting as the group members of any of the groups, forming (716) a new group including the new connection as a group member.

10. The method of claim 9, further comprising:
determining (230, 706) whether the new connection permits sharing of data context; and
forming (716), in response to determining that the new connection does not permit sharing of data context, a new group including the new connection as its only group member.

11. The method of any of claims 9 through 10, further comprising updating (710) the group priorities based on a connection priority assigned to the new connection.

12. The method of any of claims 9 through 11, further comprising, if a new group is formed:
requesting (260, 720) activation of a new data context; and
if (270, 722) the activation is successful, using (250, 724) the new data context to provide Internet access to the new group.

13. The method of any of claims 1 through 12, further comprising, when a connection provided with Internet access terminates its Internet access use (802), removing (804) the connection from the group of which it is a group member.

14. The method of claim 13, further comprising updating (808) the group priorities.

15. The method of any of claims 1 through 14, further comprising:
comparing (728, 814, 904) group priorities to determine whether the group that has the highest group priority among the groups not provided with Internet access has higher group priority than at least one of the groups provided with Internet access; and
if (730, 816, 906) the group that has the highest group priority among the groups not provided with Internet access has higher group priority than at least one of the groups provided with Internet access:
requesting (734, 818, 910) that the group members of the group that has the lowest group priority among the groups provided with Internet access terminate their Internet access use;
releasing the data context used by the group members of the group that has the lowest group priority among the groups provided with Internet access;
requesting (736, 820, 912) activation of a data context replacing the released data context; and
using (738, 822, 914) the data context replacing the released data context to provide Internet access to the group that has the highest group priority among the groups not provided with Internet access.

16. The method of claim 15, wherein the comparing step is performed when a data context is disconnected by a network action (902).

17. The method of claim 15, wherein the comparing step is performed when the group priorities have been updated (710, 808).

18. The method of claim 15, wherein the comparing step is performed when a new group has been formed (716).

19. The method of any of claims 1 through 18, further comprising, when the group member of a group comprising a single group member is removed (804, 806):
requesting (828) activation of a replacement data context; and
using (830) the replacement data context to provide Internet access to the group that has the highest group priority among the groups that are not provided with Internet access.

20. The method of any of claims 1 through 19, further comprising, when a handover occurs (1002):
requesting (1004) activation of a further data context; and
if (1006) the activation is successful, using (1010) the further data context to provide Internet access to the group that has the highest group priority among the groups that are not provided with Internet access.

21. The method of claim 20, wherein the handover is one of:
a handover from one radio access technology to another radio access technology;
a handover from one communication standard to another communication standard;
a handover from one operator network to another operator network; and
a handover from one cell to another cell.

22. A computer program product comprising a computer readable medium, having thereon a computer program comprising program instructions, the computer program being loadable into a data-processing unit and adapted to cause the data-processing unit to execute method steps according to any of claims 1 to 21 when the computer program is run by the data-processing unit.

23. An arrangement comprising:
sharing logic (125); and
a communication platform (140)
wherein the sharing logic and the communication platform are adapted to perform the method according to any of claims 1 to 21.

24. A communication device (110) comprising the arrangement according to claim 23.
